# DEMANDE DE BREVET EUROPEEN

(11) **EP 4 571 630 A1**
(43) Date de publication de la demande: **18.06.2025**
(21) Numéro de dépôt: 24219646.7
(22) Date de dépôt: 13.12.2024
(51) Int. Cl.: G06T 3/4053, G06T 5/70, G06T 5/73, G01N 23/2251

(54) **PROCÉDÉ ET DISPOSITIF DE TRAITEMENT DE DONNÉES MULTIDIMENSIONNELLES DE MICROSCOPIE POUR LA LOCALISATION DE DÉFORMATIONS ET DES ORIENTATIONS DE STRUCTURE DANS UN ÉCHANTILLON**

(30) Priorité: 14.12.2023 FR 2314226
(71) Demandeur: Commissariat à l'Energie Atomique et aux Energies Alternatives, 75015 Paris (FR)
(72) Inventeur: GUEDJ, Cyril, 38054 GRENOBLE CEDEX 9 (FR)
(74) Mandataire: Lavoix

(57) **Abrégé**

Ce procédé de traitement de données multidimensionnelles de microscopie pour cartographier des déformations et des orientations de structure dans un échantillon comporte une acquisition d'au moins une image de microscopie dudit échantillon, et :-
pour au moins un pavé de composant extrait dudit pavé de données d'entrée, application d'une transformation de super-résolution pour obtenir un pavé de gouttes super-résolu, comportant des gouttes représentatives d'une structure atomique d'une partie de l'échantillon observé,
- filtrage spectral dudit pavé de gouttes super-résolu, comportant une application d'une transformation spectrale directe, d'un masque prédéfini pour sélectionner deux plans cristallins choisis, et d'une transformation spectrale inverse de ladite transformation spectrale directe, le filtrage spectral permettant d'obtenir un pavé filtré,
- application d'une analyse de Helmholtz sur le pavé filtré permettant d'obtenir pour chaque point dudit pavé filtré une valeur de distance interplanaire et une valeur d'angle polaire entre les plans cristallins choisis.

## Description

La présente invention concerne un procédé de traitement de données multidimensionnelles de microscopie pour cartographier des déformations et des orientations de structure dans un échantillon d'au moins un matériau.

L'invention concerne également un dispositif de traitement de données multidimensionnelles de microscopie pour cartographier des déformations et des orientations de structure dans un échantillon d'au moins un matériau associé, ainsi qu'un programme d'ordinateur associé.

L'invention se situe dans le domaine du traitement de données multidimensionnelles, obtenues par observation d'échantillons composés d'un ou plusieurs matériaux, pour l'analyse de leurs propriétés physiques et de leurs structures.

Plus particulièrement, l'invention trouve des applications dans la localisation des déformations de structure dans un échantillon, au travers de l'estimation des distances interplanaires et des angles polaires entre plans cristallographiques. L'invention peut par exemple être appliquée dans l'inspection de qualité dans une chaîne de production de matériaux et dispositifs.

De manière connue, les cristaux présentent par définition un diffractogramme discret, c'est-à-dire composé de taches ou boules de diffraction, au sens de l'IUCR (Union Internationale de Cristallographie).

En pratique, des matériaux observés comportant une ou plusieurs espèces cristallines et/ou amorphes peuvent présenter des défauts, i.e. déformations ou irrégularités, qui peuvent induire des contraintes ou dysfonctionnements dans des dispositifs utilisant de tels matériaux, par exemple des courants de fuite dans des transistors.

Il est utile de disposer d'outils performants pour réaliser l'inspection de matériaux, et détecter la présence éventuelle de déformations ou irrégularités, en phase de calibration ou en phase d'optimisation technologique de divers dispositifs utilisant les matériaux.

L'analyse de propriétés physiques de matériaux par traitement de données de spectres (1D) et d'images (2D) obtenues par microscopie a été développée à cet effet.

Les images et spectres sont par exemple obtenus par microscopie électronique en transmission à haute résolution (HRTEM et HRSTEM et 4D-STEM), microscopie de fluorescence X (HRSTEM-EDX), microscopie de perte d'énergie électronique (HRSTEM-EELS et HRSTEM-VEELS), microscopie électronique en transmission filtrée en énergie (EF-HRTEM, EF-HRSTEM), microscopie à force atomique (AFM), microscopie à effet tunnel (STM), sonde atomique tomographique ou tomographie électronique par exemple. Les images de microscopie obtenues sont des images à résolution atomique, c'est-à-dire de résolution spatiale inférieure ou égale à 2 nanomètres.

Des ensembles de données de spectres et d'images représentatives chacune d'au moins une partie de l'échantillon observé sont obtenues par microscopie, formant un pavé de données à N dimensions (ou données multidimensionnelles), également appelé « datacube », N étant un entier supérieur ou égal à 2. Ce pavé de données comporte des gouttes, également appelées taches ou spots, ou « spikes » ou « blobs » en anglais, qui se détachent sur un fond homogène (par exemple des gouttes ou taches claires sur fond homogène sombre). Ces gouttes sont représentatives de caractéristiques structurelles du matériau de l'échantillon observé, par exemple d'un alignement d'atomes le long de la direction d'observation. Le pavé de données acquis par microscopie peut également contenir du bruit.

Par exemple, s'agissant de l'observation de cristaux, des gouttes disposées selon un motif régulier représentent le maillage cristallin.

Le modèle atomique le plus simple est un modèle de sphère dure, qui représente la nature particulaire d'un atome. Les microscopes les plus performants permettent de visualiser les atomes, qui se présentent généralement sous l'image d'une goutte. En deux dimensions, les gouttes sont également appelées taches. En une dimension, les gouttes sont des points.

Mathématiquement, on définit dans ce brevet une goutte comme étant une composante simplement connexe d'un espace topologique discret, au sens de la topologie générale. Cela signifie que tout lacet tracé dans une goutte peut être réduit par homotopie à un point. Physiquement, on définit une goutte comme le signal électrique produit par les pixels d'un détecteur matriciel suite à l'impact d'une particule (électron, photon, ion, fermions, boson, etc.). La particule est toujours beaucoup plus petite que le pixel, donc la goutte peut toujours se réduire à un point par homotopie, conformément à la définition mathématique de la goutte. Il existe donc un accord précis entre la définition physique et la définition mathématique de la goutte.

Dans l'état de la technique, on connaît des méthodes de mesure de déformations dans des matériaux observés par microscopie. En particulier, une technique appelée diffraction d'électrons par précession (de l'anglais « Procession électron diffraction ou PED ») a été proposée dans l'article de R. Vincent et P.A. Midgley « Double conical beam-rocking system for measurement of integrated électron diffraction intensities », publié dans Ultramicroscopy, Vol. 53, n°3, 1994. Cette technique permet d'obtenir une résolution spatiale de l'ordre de 2 nm et une précision de 0,02 %. Un inconvénient potentiel de cette technique est l'acquisition des données potentiellement longue qui est susceptible d'endommager les matériaux les plus fragiles par effet de bombardement électronique. Cette méthode n'a pas une résolution spatiale suffisante pour mesurer les déformations et les rotations individuelles de chaque plan cristallin dans l'échantillon.

L'évolution des noeuds technologiques les plus avancés de l'ITRS (International Technology Roadmap for Semiconductors) engendre le besoin de localiser les déformations et les rotations locales à l'échelle des plans cristallins, tout en préservant l'échantillon observé.

Le but de l'invention est alors de proposer un procédé et dispositif de localisation de déformations et des orientations de structure dans un échantillon avec une précision améliorée tout en préservant l'échantillons observé.

A cet effet, l'invention a pour objet un procédé de traitement de données multidimensionnelles de microscopie pour cartographier des déformations et des orientations de structure dans un échantillon d'au moins un matériau, comportant une obtention d'au moins une image de microscopie dudit échantillon formant un pavé de données d'entrée, la ou chaque image dudit pavé de données d'entrée étant représentative d'une partie de l'échantillon observé, ledit pavé de données d'entrée étant représenté dans un espace à N dimensions, N étant supérieur ou égal à deux, chaque donnée dudit pavé correspondant à un point de l'espace à N dimensions. Ce procédé comporte des étapes de :
- pour au moins un pavé de données extrait dudit pavé de données d'entrée, dit pavé de composante, comportant des données homogènes selon un critère d'homogénéité relatif à au moins un matériau de l'échantillon observé, application d'une transformation de super-résolution audit pavé de composante pour obtenir un pavé, dit pavé de gouttes super-résolu, comportant des gouttes représentatives d'une structure atomique d'une partie de l'échantillon observé,
- filtrage spectral dudit pavé de gouttes super-résolu, comportant une application d'une transformation spectrale directe, d'un masque prédéfini pour sélectionner deux plans cristallins choisis, et d'une transformation spectrale inverse de ladite transformation spectrale directe, le filtrage spectral permettant d'obtenir un pavé filtré,
- application d'une analyse de Helmholtz sur le pavé filtré permettant d'obtenir pour chaque point dudit pavé filtré une valeur de distance interplanaire et une valeur d'angle polaire entre les plans cristallins choisis, les valeurs de distance interplanaire formant une cartographie des déformations de structure selon les plans cristallins choisis et les valeurs d'angle polaire formant une cartographie des orientations de structure associée.

Avantageusement, les traitements d'application d'une transformation de super-résolution et de filtrage spectral selon des plans cristallins choisis, puis d'une analyse de Helmholtz, permettent de calculer des distances interplanaires et des angles polaires associés, représentatifs de déformations et rotations locales des plans cristallins choisis par traitement numérique, avec une très bonne précision, allant jusqu'à l'atome individuel, avec des techniques d'acquisition de données rapides. En effet, une seule image de plein champ même bruitée suffit pour obtenir le résultat, contrairement à la technique PED qui nécessite l'acquisition d'une image de diffraction par point sur l'échantillon, soit plus de 33 millions de points d'acquisition si la cartographie est au format UHD 8K.

Le procédé de traitement de traitement de données multidimensionnelles de microscopie pour cartographier des déformations et des orientations de structure dans un échantillon selon l'invention peut également présenter une ou plusieurs des caractéristiques ci-dessous, prises indépendamment ou selon toutes les combinaisons techniquement envisageables.

L'application d'une transformation de super-résolution comporte une convolution par un filtre HBSG de noyau carré de taille inférieure ou égale à deux fois la médiane des distances entre gouttes voisines.

L'application d'une transformation de super-résolution comporte en outre une augmentation du nombre de points du pavé à N dimensions obtenu par ladite transformation de super-résolution.

Le procédé comporte en outre une étape de normalisation locale.

L'application d'une transformation de super-résolution pour obtenir un pavé de gouttes super-résolu comportant des gouttes représentatives d'une structure atomique d'une partie de l'échantillon observé met en oeuvre une étape de segmentation utilisant un algorithme d'apprentissage machine, entraîné pour classifier les données du pavé de gouttes super-résolu en deux classes, respectivement une classe de « fond » et une classe de « gouttes ».

L'application d'une transformation de super-résolution pour obtenir un pavé de gouttes super-résolu comportant des gouttes représentatives d'une structure atomique d'une partie de l'échantillon observé met en oeuvre en outre une étape d'affinage.

L'étape d'affinage met en oeuvre une application d'un masque de filtrage spectral d'affinage, dans lequel le masque de filtrage spectral d'affinage est obtenu à partir du maximum de la segmentation par apprentissage machine de la transformée de Fourier du pavé de composante normalisé entre 0 et 1 et d'un diffractogramme théorique ajusté normalisé entre 0 et 1.

L'étape d'affinage met en oeuvre un calcul d'un diffractogramme expérimental dudit pavé de gouttes et un masquage par un diffractogramme théorique ajusté sur ledit diffractogramme expérimental.

Dans l'étape de filtrage spectral, ladite transformation spectrale est une transformée de Fourier.

Le procédé comporte en outre une étape de correction des artéfacts de filtrage spectral.

L'invention concerne également un programme d'ordinateur comportant des instructions logicielles qui, lorsqu'elles sont exécutées par un dispositif électronique programmable, mettent en oeuvre un procédé de traitement de traitement de données multidimensionnelles de microscopie pour cartographier des déformations et des orientations de structure dans un échantillon tel que défini ci-dessus.

L'invention concerne également un dispositif de traitement de traitement de données multidimensionnelles de microscopie pour cartographier des déformations et des orientations de structure dans un échantillon d'au moins un matériau, comportant un module d'obtention d'au moins une image de microscopie dudit échantillon formant un pavé de données d'entrée, la ou chaque image dudit pavé de données d'entrée étant représentative d'une partie de l'échantillon observé, ledit pavé de données d'entrée étant représenté dans un espace à N dimensions, N étant supérieur ou égal à deux, chaque donnée dudit pavé correspondant à un point de l'espace à N dimensions. Ce dispositif comporte un processeur configuré pour mettre en oeuvre:
- pour au moins un pavé de données extrait dudit pavé de données d'entrée, dit pavé de composante, comportant des données homogènes selon un critère d'homogénéité relatif à au moins un matériau de l'échantillon observé, un module d'application d'une transformation de super-résolution au pavé de composantes pour obtenir un pavé, dit pavé de gouttes super-résolu, comportant des gouttes représentatives d'une structure atomique d'une partie de l'échantillon observé,
- un module de filtrage spectral dudit pavé de gouttes super-résolu, configuré pour appliquer une transformation spectrale directe, un masque prédéfini pour sélectionner deux plans cristallins choisis, et une transformation spectrale inverse de ladite transformation spectrale directe, le filtrage spectral permettant d'obtenir un pavé filtré,
- un module d'application d'une analyse de Helmholtz sur le pavé filtré permettant d'obtenir en chaque point dudit pavé filtré une valeur de distance interplanaire et une valeur d'angle polaire entre les plans cristallins choisis, les valeurs de distance interplanaire formant une cartographie des déformations de structure selon les plans cristallins choisis et les valeurs d'angle polaire formant une cartographie des orientations de structure associée.

L'invention apparaîtra plus clairement à la lecture de la description qui va suivre, donnée uniquement à titre d'exemple non limitatif, et faite en référence aux dessins dans lesquels :
- la figure 1 est un schéma-bloc d'un système d'inspection de données multidimensionnelles de microscopie comportant un dispositif de traitement de données multidimensionnelles de microscopie selon un mode de réalisation ;
- la figure 2 est un synoptique d'un procédé de traitement de données multidimensionnelles de microscopie selon un mode de réalisation ;
- la figure 3 est un exemple de découpage en composantes homogènes;
- la figure 4 est un exemple en deux dimensions d'un pavé de données d'entrée et de pavé super-résolu correspondant obtenu par application d'une transformation de super-résolution ;
- la figure 5 est un exemple de filtrage spectral pour la sélection d'une paire de plans cristallins ;
- la figure 6 est un exemple de cartographie de déformations de l'image d'entrée de la figure 3 pour les plans cristallins (0-11) et (01-1) ;
- la figure 7 est un exemple de cartographie d'orientations obtenue pour l'image d'entrée de la figure 3 pour les plans cristallins (0-11) et (01-1) ;
- la figure 8 représente des profils des déformations et orientations des plans (00 22) et (00 -22) obtenus à partir de l'image d'entrée de la figure 3.

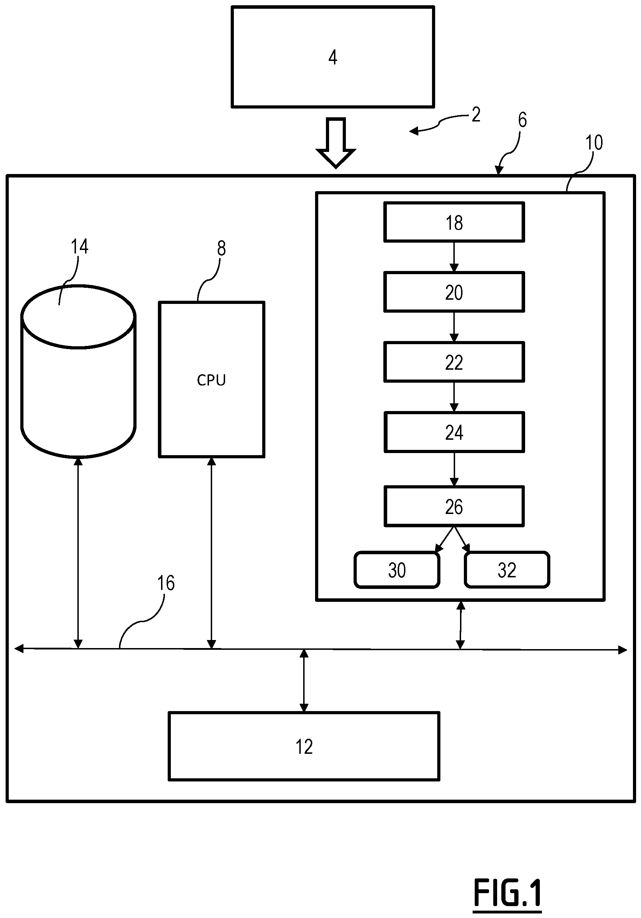

La **figure 1** illustre schématiquement un système de détection et de mesure des déformations et orientations des plans cristallins 2 dans un échantillon d'un ou plusieurs matériaux à partir de données multidimensionnelles représentatives de l'échantillon, acquises par une machine de caractérisation 4.

Toute technique de microscopie adaptée pour la caractérisation d'un tel échantillon est applicable.

Dans un mode de réalisation, la machine de caractérisation 4 est un microscope électronique en transmission (TEM) qui permet d'acquérir des images d'un échantillon composé d'un ou plusieurs matériaux, comportant par exemple des matériaux cristallins.

Le microscope électronique 4 permet d'acquérir simultanément des images de diffraction électronique, des spectres EELS (pour « Electron Energy Loss Spectroscopy »), des spectres EDX (pour « Energy Dispersive X-Ray Analysis ») des signaux de différents capteurs (BF pour « Bright field », DF pour « Dark field », DPC pour « Differential phase contrast » ou tout autre capteur adapté ou customisé), pour chaque point de l'échantillon en mode de microscopie à balayage appelé mode STEM (pour « Scanning Transmission Electron Microscope »). Un autre mode d'acquisition possible est le mode TEM qui permet d'obtenir une image globale sans avoir à balayer le faisceau d'électrons.

Dans un autre mode de réalisation, la machine de caractérisation 4 est un microscope à sonde tel que le microscope à force atomique ou le microscope à effet tunnel ou les autres variantes telles que le microscope à sonde de Kelvin par exemple, dans un mode de mesure permettant d'obtenir des images de résolution spatiale atomique.

Chaque spectre ou image acquis est représenté sous forme d'image numérique, comportant des points ou pixels, chaque image étant représentative d'au moins une partie de l'échantillon observé.

L'ensemble des spectres et images acquis forme un pavé de données à N dimensions, N étant un entier naturel supérieur ou égal à 2. Un tel pavé de données est également appelé « datacube ».

Dans un mode de réalisation, plusieurs spectres ou images sont acquis dans le temps, montrant une évolution de l'échantillon lors de l'analyse. Dans ce mode de réalisation, le temps est une dimension supplémentaire du pavé de données.

En complément, une autre dimension du pavé de données est la focalisation du microscope, l'énergie des électrons, un angle (de l'échantillon, de collection des électrons, de convergence de électrons), ou tout autre paramètre de réglage du microscope susceptible de varier de manière contrôlée durant la mesure.

Les données incomplètes peuvent éventuellement être extrapolées à partir des valeurs voisines le cas échéant, par exemple pour corriger les éventuelles imperfections rencontrés durant l'acquisition de données. En règle générale les mesures à l'échelle atomique sont très souvent entachées de défauts car un simple bruit acoustique ou électronique peut parfois les perturber.

Dans un pavé de données multidimensionnelles d'un échantillon cristallin, la maille forme usuellement un réseau régulier de gouttes représentatives de l'agencement des atomes. Les simulations permettent de prédire quel seront les pavés N-dimensionnels (ou datacubes) attendus pour un matériau donné et pour un réglage particulier du microscope.

Comme déjà indiqué ci-dessus, mathématiquement, une goutte est une composante simplement connexe d'un espace topologique discret, au sens de la topologie générale.

Les valeurs des pixels appartenant à une goutte se distinguent d'un fond d'image. Ce fond est défini par une intensité ramenée à zéro après segmentation.

Un pavé de données multidimensionnelles d'un échantillon observé est transmis à un dispositif 6 de traitement de données multidimensionnelles de microscopie pour la cartographie des déformations et des orientations locales des plans cristallins.

Par exemple, la transmission est effectuée par une liaison filaire ou par liaison sans fil (optique, radio, ou autre).

Le dispositif 6 de traitement est, dans un mode de réalisation, un dispositif électronique programmable, e.g. un ordinateur.

Le dispositif 6 comporte un processeur 8 (CPU ou GPU) associé à une mémoire électronique 10. Optionnellement, le dispositif 6 comporte une interface homme-machine 12, comportant notamment un écran d'affichage de données. En outre le dispositif 6 comporte ou est connecté à une mémoire de stockage 14. Les éléments 8, 10, 12, 14 du dispositif 6 sont adaptés pour communiquer via un bus de communication 16.

Le processeur 8 (CPU ou GPU) est configuré pour exécuter des modules 18, 20, 22, 24, 26, mémorisés dans la mémoire électronique 10, pour mettre en oeuvre un procédé de traitement de données multidimensionnelles représentatives de l'échantillon observé.

Le module 18 est un module d'obtention de pavé de données multidimensionnelles à traiter, configuré pour obtenir un pavé de données comportant au moins une image d'entrée, à partir d'un pavé de données obtenu par la machine de caractérisation 4.

Par exemple, le module d'obtention 18 est configuré pour obtenir le pavé de données à traiter (ou pavé de données d'entrée) à partir d'une mémoire électronique, où ces données ont été mémorisées après acquisition.

Le module 20 est un module de partitionnement qui découpe le pavé de données en plusieurs pavés (ou sous-pavés) comportant chacun des données homogènes selon un critère d'homogénéité choisi.

Le module 22 est un module de transformation de super-résolution du pavé d'entrée en pavé de gouttes représentatives de la structure atomique de l'échantillon observé.

Dans un mode de réalisation, le module 22 est configuré pour mettre en oeuvre une convolution, une augmentation optionnelle du nombre de points (ou de pixels) du pavé convolué, une normalisation locale puis une segmentation soit par seuillage des données soit par apprentissage machine et un affinage comme décrit plus en détail ci-après.

Le module 24 est un module de filtrage spectral qui permet de sélectionner les plans cristallins dans la transformée de Fourier du pavé de gouttes obtenu en 22, et d'obtenir ensuite un pavé filtré contenant des données relatives aux plans cristallins sélectionnés.

Dans un mode de résolution, le module 24 de filtrage spectral met en oeuvre une application d'une transformation spectrale directe, par exemple une transformation de Fourier directe TF1 ; une application d'un masque prédéfini pour sélectionner au moins deux plans cristallins choisis, de préférence symétriques par rapport au centre du réseau réciproque, et une application d'une transformation spectrale inverse de ladite transformation spectrale directe, par exemple la transformation de Fourier inverse de TF1.

On entend par réseau réciproque la définition classiquement donnée par l'IUCR, à savoir l'ensemble des vecteurs k tels que e^{ik.r}=1 pour tous les vecteurs position r du réseau de Bravais qui décrit le cristal dans le réseau réel. Le réseau réciproque permet de décrire le cristal dans l'espace des phases.

Dans un mode de réalisation, le module 24 met en oeuvre en outre une correction des artéfacts de la transformée de Fourier.

Le module 26 d'analyse de Helmholtz met en oeuvre une analyse de Helmholtz permettant d'obtenir une cartographie 30 des distances interplanaires entre les plans cristallins sélectionnés par le module de filtrage spectral 24 et une cartographie 32 des angles polaires en 2D, et des angles hypersphériques en dimension N>2, entre les plans cristallins sélectionnés par le module de filtrage spectral 24.

La cartographie 30 est une cartographie permettant de localiser des éventuelles déformations de structure relatives aux distances interplanaires (ou distances inter-réticulaires) pour les plans cristallins sélectionnés.

La cartographie 32 est une cartographie représentative des orientations de structure, e.g. des orientations des plans cristallins sélectionnés.

Les paramètres de la méthode de transformation par super-résolution du module 22, sont mémorisés, par exemple dans la mémoire électronique de stockage 14.

Dans un mode de réalisation, les modules 18, 20, 22, 24, 26 sont réalisés chacun sous forme d'un logiciel, et forment un programme d'ordinateur, comportant des instructions logicielles qui, lorsqu'elles sont exécutées par un ordinateur, mettent en oeuvre un procédé de traitement de données multidimensionnelles de microscopie pour cartographier des déformations et des orientations de structure dans un échantillon d'au moins un matériau tel que décrit plus en détail ci-après.

En variante non représentée, les modules 18, 20, 22, 24, 26 sont réalisés chacun sous forme d'un composant logique programmable, tel qu'un FPGA (de l'anglais *Field Programmable Gate Array*), un GPU (processeur graphique) ou un GPGPU (de l'anglais *General-purpose processing on graphies processing*), ou encore sous forme d'un circuit intégré dédié, tel qu'un ASIC (de l'anglais *Application Spécifie Integrated Circuit*)*.* Les variantes incluent évidemment les évolutions connues par l'homme du métier dans le domaine de l'informatique et plus généralement du traitement automatisé des informations.

Le logiciel de traitement de traitement de données multidimensionnelles de microscopie pour cartographier des déformations et des orientations de structure dans un échantillon d'au moins un matériau est en outre apte à être enregistré, sous forme de programme d'ordinateur comportant des instructions logicielles, sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM, RRAM, PCRAM, NAND 2D, NAND 3D, SLC NAND, MLC NAND, TLC NAND, V-NAND, QLC), une carte magnétique ou une carte optique, un disque SSD, et toute variante connues par l'homme du métier dans le domaine du stockage numérique des données.

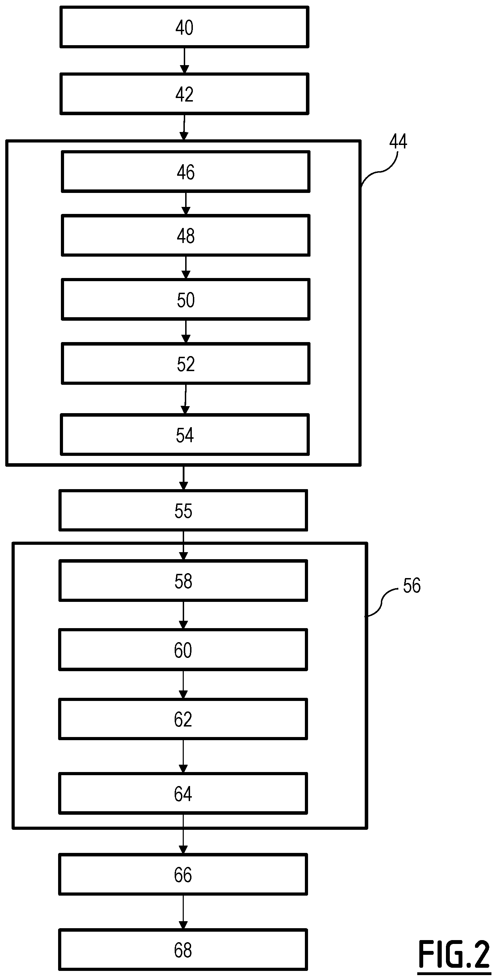

La **figure 2** est un synoptique des principales étapes d'un procédé de traitement de données multidimensionnelles de microscopie pour cartographier des déformations et des orientations de structure dans un échantillon d'au moins un matériau, dans un mode de réalisation.

Il est à noter que le procédé s'applique pour des matériaux cristallins et/ou des matériaux amorphes.

Le procédé comprend une étape 40 d'obtention d'un pavé de données d'entrée à traiter, comportant au moins une image, représentant l'échantillon à inspecter.

Le pavé de données comporte des gouttes se détachant d'un fond homogène, par exemple des gouttes claires sur fond sombre en microscopie HRSTEM-HAADF, ou HRTEM éventuellement filtré en énergie, représentatives de la structure atomique de l'échantillon observé. Le lien entre la position des atomes et la position des gouttes est obtenu par des simulations qui tiennent compte notamment des réglages du microscope.

D'une manière générale, le pavé de données d'entrée est un pavé à N dimensions, N supérieur ou égal à 2.

Les données du pavé sont des valeurs numériques, chaque valeur étant associée à un point dans l'espace à N dimensions. Un tel point est également appelé pixel lorsque N=2. Chaque point a une coordonnée associée dans chaque dimension, en général représentée par un indice.

Dans un mode de réalisation, N=2, le pavé de données d'entrée étant alors une matrice LxW (i.e. L lignes et W colonnes), composée de valeurs de pixels, chaque pixel ayant des coordonnées respectives (x,y), x étant par exemple un indice de ligne et y un indice de colonne.

Optionnellement, si le matériau n'est pas homogène, l'étape 42 de partitionnement spatial ou découpage du pavé de données d'entrée en sous-pavés de données d'entrée est mise en oeuvre.

Par définition, chaque sous-pavé de données d'entrée est un espace connexe discret au sens de la topologie générale et comporte des données homogènes selon un critère relatif à au moins un matériau de l'échantillon observé.

Le critère d'homogénéité est une homogénéité de structure, en référence à l'agencement des atomes dans un matériau donné. Le découpage de partitionnement est par exemple effectué par apprentissage machine, par exemple par segmentation supervisée, semi supervisée ou par classification autonome après apprentissage (par exemple profond). Classiquement, la structure est par exemple quantifiée par l'intermédiaire du diffractogramme numérique. Un sous-pavé de gouttes est désigné comme représentatif de la structure s'il contient un nombre de gouttes supérieur à 3 à la puissance n, où n représente la dimension du pavé. Par exemple, pour une image n=2 et un sous-pavé est considéré comme représentatif de la structure locale s'il contient au minimum 9 gouttes voisines.

L'homogénéité structurale est obtenue quand les diffractogrammes numériques de tous les sous-pavés de gouttes représentatifs sont similaires, c'est-à-dire quand leurs distances relatives sont inférieures à un seuil choisi. Dans la littérature, il existe de nombreuses méthodes de quantification de la similarité qui peuvent servir à quantifier l'homogénéité structurale par l'intermédiaire de la similarité des transformées de Fourier.

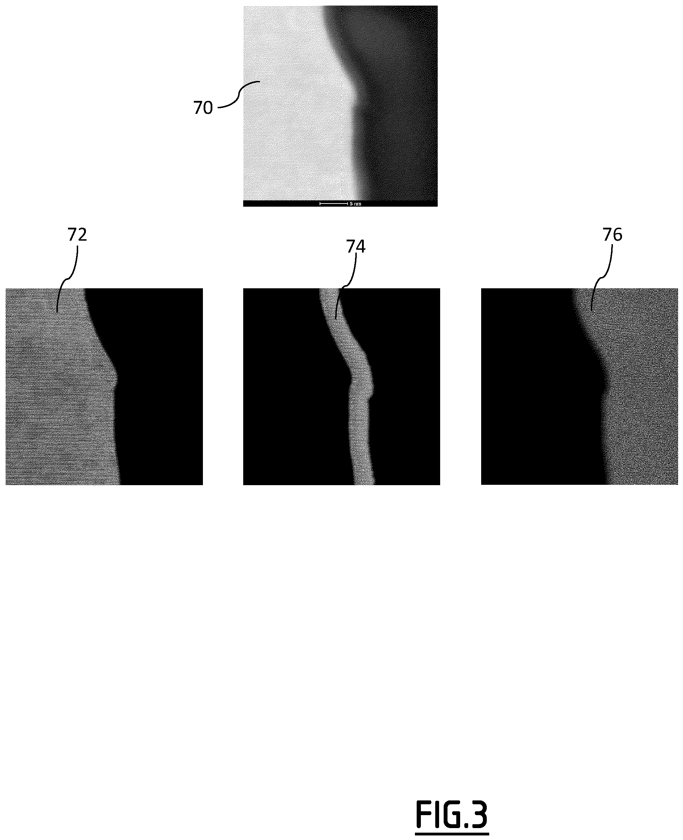

La **figure 3** illustre des découpages d'une image d'entrée 70 (pavé de données d'entrée à deux dimensions) en trois sous-images 72, 74, 76 comportant chacune des données homogènes selon un critère de structure. Chacune des sous-images 72, 74, 76 comprend une partie homogène en grisé sur fond noir, les parties homogènes correspondant à des partitions de l'image d'entrée 70.

L'étape 42 est suivie d'une étape 44 de transformation dite de transformation de super-résolution dudit pavé de données d'entrée pour obtenir un pavé de gouttes dit pavé de gouttes super-résolu, comportant des gouttes représentatives d'une structure atomique d'une partie de l'échantillon observé.

L'étape 44 est réalisée sur chaque sous-pavé de gouttes, puis si besoin une fusion 55 optionnelle des sous-pavés (c'est-à-dire un départitionnement ou réassemblage spatial) est réalisée avant l'étape 56.

Comme déjà indiqué supra, les gouttes sont des composantes simplement connexes de l'espace topologique discret à N dimensions.

L'étape 44 met en oeuvre un filtrage par convolution (étape 46) avec un noyau HBSG (pour « Half Ball Savitzky-Golay ») tel que décrit dans la demande de brevet FR3 118 256 (« FILTRE DE TRAITEMENT D'IMAGE POUR LA LOCALISATION DE GOUTTES DANS UNE IMAGE MULTIDIMENSIONNELLE ET PROCÉDÉ DE TRAITEMENT D'IMAGE ASSOCIÉ »). Ce filtrage, par exemple utilise un noyau HBSG carré de taille correspondant à la médiane des distances entre gouttes voisines (par exemple 21 pixels), avec un lissage d'ordre 2 ou 3. Plus ce noyau est petit, plus il conserve les détails les plus fins, donc la taille est choisie pour s'adapter à la finesse des détails recherchés. Par contre en contrepartie une taille trop petite élimine moins de bruit.

Plus généralement, à l'étape de filtrage 46 est mis en oeuvre un filtre HBSG de noyau carré de taille inférieure ou égale à deux fois la médiane des distances entre gouttes voisines.

L'étape 46 de filtrage par convolution est suivie d'une étape optionnelle 48 d'augmentation du nombre de points (ou de pixels).

Dans un mode de réalisation l'étape 48 met en oeuvre une interpolation, à l'aide d'une technique de reconstruction ou d'une technique de super-résolution telle que la méthode de variation totale, appelée « total variation » (TV) en anglais. Cette méthode consiste à réguler la création des nouveaux points sur la variation totale des contrastes de l'image originale. Cette approche permet de conserver les variations globales de contraste tout en préservant les bords des gouttes de l'image. La méthode de variation totale est notamment décrite dans la publication L. I. Rudin, S. Osher, and E. Fatemi, Nonlinear total variation based noise removal algorithms, Physica D, 60 (1), 259-268 (1992).

Optionnellement, l'étape 44 comprend également une étape 50 de normalisation locale consistant à diviser les valeurs du pavé de données traité par la variance locale, obtenue en calculant la racine carrée de la convolution par un filtre gaussien du carré des valeurs du pavé de données traité. De préférence, la dimension du filtre gaussien utilisé pour calculer la variance locale représente la médiane des distances entre gouttes voisines. Pour mettre en relief des plus petits détails, une taille plus petite peut être choisie. En contrepartie, plus la taille est petite, plus le risque d'exacerber la contribution du bruit augmente.

Enfin, la dernière transformation de l'étape 44 consiste à segmenter (étape 52) des gouttes super-résolues, afin de remplacer le voisinage des gouttes par un fond uniformément noir.

Selon une première variante, la segmentation 52 met en oeuvre un seuillage adaptatif de Bernsen, connu dans le domaine du traitement des images, avec un rayon proche de la moitié de la médiane des distances entre gouttes voisines (par exemple 10 pixels).

Selon une deuxième variante, la segmentation 52 met en oeuvre un apprentissage machine comme décrit plus en détail ci-après. L'algorithme d'apprentissage machine permet de distinguer deux classes, respectivement la classe de « gouttes » (ou « spots » en anglais) et la classe de « fond ».

Par exemple, l'apprentissage machine est effectué avec un algorithme de type forêt aléatoire rapide « Fast random forest », décrit dans l'article de Léo Breiman (2001). « Random Forests », publié dans Machine Learning. 45(1):5-32).

En variante, d'autres algorithmes de classification par apprentissage machine peuvent être mis en oeuvre, par exemple de type Bayesien, ou à base de fonctions, ou à base de règles, ou une combinaison de tels algorithmes, ou à base de toute la palette d'outils utilisés en classification par apprentissage machine tels que l'apprentissage profond (en anglais « deep learning » par exemple).

En règle générale, les gouttes représentent moins de 20 % de l'image, et leur taille est inférieure à 1 nm, après calibration sur les tailles réelles dans l'échantillon. Les simulations des images théoriques permettent de déterminer quelle est la distribution attendue des gouttes dans l'image afin de vérifier que la segmentation est correcte. Une segmentation est correcte si le nombre et la position des gouttes s'approche des valeurs théoriques attendues au-delà d'un seuil d'incertitude donné.

Optionnellement, l'étape 44 comporte en outre un affinage 54 permettant de se rapprocher encore plus de la forme théorique des gouttes.

Selon une première variante, l'étape d'affinage 54 comprend un filtrage par convolution pour combler d'éventuels trous à l'intérieur des gouttes. Par exemple, un filtre HBSG est mis en oeuvre, et/ou un algorithme de type « fill holes » (K.-J. Oh, S. Yea, and Y.-S. Ho, "Hole filling method using depth based inpainting for view synthesis in free viewpoint télévision and 3- D vidéo," publié dans Proc. Picture Coding Symp., Chicago, IL, May 2009.). L'objectif consiste à s'approcher de la forme théorique idéale, nécessairement exempte de trous.

Une deuxième variante d'affinage 54 pour s'approcher encore plus de la distribution théorique des gouttes consiste à réaliser une convolution théorique, c'est-à-dire un masquage du diffractogramme des gouttes avec un diffractogramme théorique ajusté au mieux sur le diffractogramme expérimental. Cet ajustement de la théorie par rapport à l'expérience consiste à varier les paramètres théoriques de longueurs (a,b,c) et d'angles (α,β,γ) définissant la maille du cristal afin de minimiser l'écart quadratique moyen entre le diffractogramme expérimental et le diffractogramme théorique.

Une troisième variante d'affinage 54 consiste à segmenter le diffractogramme des gouttes par un apprentissage machine qui permet de distinguer deux classes, respectivement la classe de « pic de diffraction » et la classe de « fond ».

Par exemple, l'apprentissage machine est effectué avec un algorithme de type forêt aléatoire rapide « Fast random forest », décrit dans l'article de Léo Breiman (2001). « Random Forests », publié dans Machine Learning. 45(1):5-32).

En variante, d'autres algorithmes de classification par apprentissage machine peuvent être mis en oeuvre, par exemple de type Bayesien, ou à base de fonctions, ou à base de règles, ou une combinaison de tels algorithmes, ou à base de toute la palette d'outils utilisés en classification par apprentissage machine tels que l'apprentissage profond (« deep learning » en anglais) par exemple. Cette segmentation par apprentissage machine du diffractogramme des gouttes permet de définir le masque de filtrage spectral permettant de conserver uniquement les pics fréquentiels importants et d'éliminer sélectivement les informations indésirables provenant du bruit à éliminer.

Une quatrième variante d'affinage 54 consiste à masquer le diffractogramme des gouttes avec un masque qui est le maximum du (diffractogramme théorique ajusté normalisé entre 0 et 1) et du (résultat de segmentation par apprentissage machine normalisé entre 0 et 1 de la transformée de Fourier des gouttes). Ce masque de filtrage spectral particulier combine les informations théoriquement attendues avec les informations les plus significatives présentes dans le diffractogramme expérimental.

C'est la simulation atomistique des images théoriques « parfaites » qui permet de vérifier que les paramètres de traitement d'images permettent de converger vers la forme théorique idéale, pour chaque cristal, chaque orientation et chaque jeu de paramètres instrumentaux.

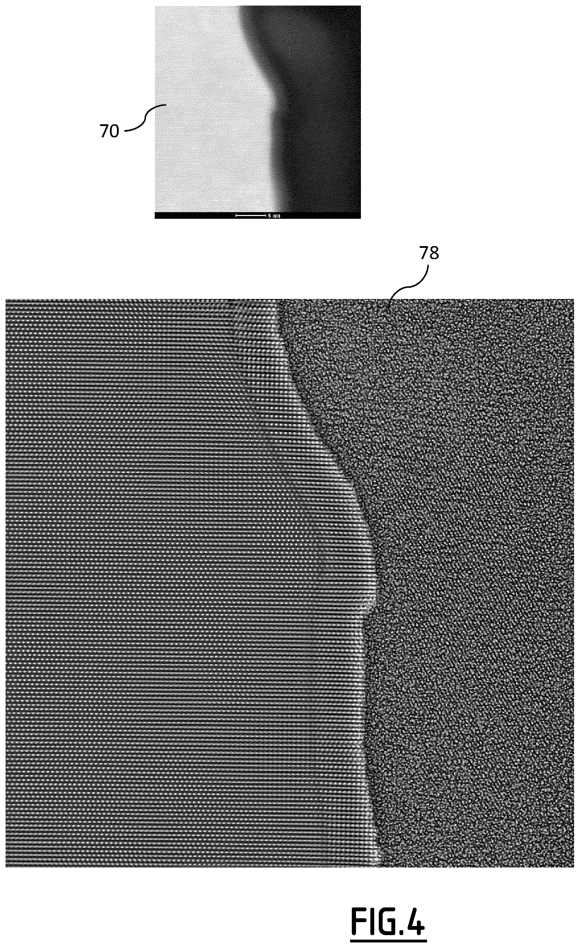

La **figure 4** illustre une image 78 super-résolue correspondant à un pavé de gouttes super-résolu en deux dimensions obtenu par l'application de l'étape 44 à chaque sous-région de l'image d'entrée 70 et fusion des sous-régions.

Le procédé comprend également une étape 56 de filtrage spectral pavé de gouttes super-résolu résultant de l'étape 55.

L'étape de filtrage spectral permet de sélectionner les plans cristallins, de préférence symétriques par rapport au centre du réseau réciproque, et d'éliminer les autres informations par filtrage spectral.

L'étape 56 comporte une application 58 d'une transformation spectrale directe TF1, une application 60 d'un masque prédéfini pour sélectionner au moins deux plans cristallins choisis symétriques par rapport au centre du réseau réciproque, et d'une transformation spectrale inverse 62 de la transformation spectrale directe TF1, ce filtrage spectral 56 permettant d'obtenir un pavé spatial filtré, pour obtenir un pavé filtré.

Dans un mode de réalisation, la transformation spectrale est une transformée de type Fourier.

L'expression « transformée de type Fourier » désigne la transformée de Fourier et toutes ses variantes et généralisations aux hyperespaces, notamment la transformée de Hartley, la transformée de Hartley discrète (DHT), la transformée de Fourier rapide, la transformée de Fourier discrète, la transformée de Fourier discrète généralisée, la transformée de Fourier à court terme ou « short-time Fourier transform » ou « short-term Fourier transform » (STFT) en anglais, la transformée de Fourier fractionnaire ou «Fractional Fourier transform » (FRFT) en anglais, la transformée de Chirplet, la transformée de Hankel, la transformée de Fourier-Bros-Lagolnitzer, la transformée linéaire canonique, les transformées de type discrete-time Fourier transform (DTFT), la transformée de Fourier à espace discret ou « discrete-space Fourier transform » (DSFT) en anglais, la transformée en Z, la transformée en cosinus discrète modifiée ou « modified discrète cosine transform » (MDCT) en anglais, et la transformée de Fourier de groupes finis.

L'étape 58 permet d'obtenir le diffractogramme des gouttes, c'est-à-dire le cliché de diffraction électronique.

L'étape de masquage 60 permet de conserver uniquement les régions sélectionnées par la valeur supérieure du masque. Toutes les informations spectrales contenues dans les régions nulles du masque sont donc éliminées. Mathématiquement chaque terme du pavé spectral est multiplié par son homologue dans le masque pour garder uniquement l'information contenue dans les régions non nulles.

Le masque à appliquer est formé en fonction du diffractogramme théorique des plans cristallins choisis, par paire de plans cristallins symétrique par rapport au centre.

Il est entendu que le procédé tel que décrit est applicable à plusieurs paires de plans cristallins choisis, en itérant les étapes 56 et 66.

La détermination d'un masque correspondant à une paire de plans cristallins est déterminée sur des pavés représentant le réseau réciproque théorique ajusté sur le réseau réciproque réel lors de l'étape d'affinage 54. Chaque goutte du diffractogramme peut alors être indexée comme tout diffractogramme, en appliquant les conventions de l'IUCR.

L'étape 56 de filtrage spectral comprend ensuite l'étape de transformée de Fourier inverse 62 qui régénère un pavé de données filtré, obtenu après filtrage spectral.

De préférence, le procédé comporte également une étape 64 de correction des artéfacts de filtrage spectral consistant à éliminer toutes les zones qui présentent des imperfections résiduelles, notamment les bords de l'image.

En effet, l'étape 46 de convolution génère toujours des artéfacts au pourtours du pavé de données qu'il convient donc de masquer. C'est la simulation atomistique des images théoriques parfaites qui permet de déterminer précisément quelles sont les régions du pavé de données qui présentent de telles aberrations numériques locales.

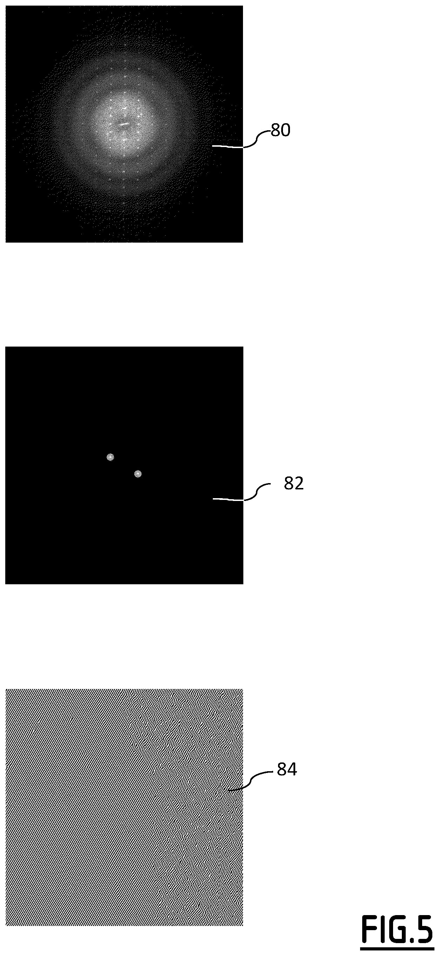

La **figure 5** illustre l'image 80 dans le domaine spectral (ou pavé de données 2D) obtenue par application d'une transformée de Fourier à l'image super-résolue 78 de la figure 4, et un masque 82 appliqué pour sélectionner les plans cristallins (0-11) et (01-1). L'image filtrée 84, représentative des données des plans cristallins (0-11) et (01-1) de l'image d'entrée 70, est obtenue par application de la transformée de Fourier inverse après masquage spectral. Le contraste est ici poussé au maximum pour mieux visualiser le résultat sous forme de zébrures très marquées.

Le procédé comprend ensuite une étape 66 d'application d'une analyse de Helmholtz sur le pavé filtré permettant d'obtenir en chaque point du pavé filtré une valeur de distance interplanaire et une valeur d'angle polaire entre plans cristallins, les valeurs de distance interplanaire formant une cartographie des déformations et les valeurs d'angle polaire formant une cartographie des orientations des plans cristallins.

L'analyse de Helmholtz est basée sur l'équation de Helmholtz (d'après le physicien Hermann von Helmholtz) qui est une équation aux dérivées partielles elliptique utilisée pour la recherche de solutions harmoniques de l'équation de propagation des ondes de d'Alembert.

Dans son application au traitement des images, l'analyse de Helmholtz, ou décomposition de Helmholtz, s'applique pour l'analyse de structures d'images (e.g. des textures) comportant des stries multiples similaires à des ondes se propageant dans un espace. L'analyse de Helmholtz consiste à résoudre des équations aux dérivées partielles afin d'ajuster localement des ondes sur une image de ce type, et plus généralement des ondes multidimensionnelles sur un pavé N-dimensionnel. La résolution de l'équation d'Helmholtz consiste généralement à trouver les valeurs propres du laplacien et dans la littérature il existe une grande variété de méthodes pour résoudre ce types d'équations largement utilisées en physique ondulatoire. Il est par exemple possible d'utiliser la méthode de séparation des variables ou l'approximation paraxiale.

Ces outils permettent de calculer la longueur d'onde et l'orientation locale, et de déduire dans l'application au pavé filtré N-dimensionnel, une distance interplanaire locale et une orientation locale, permettant de former respectivement la cartographie des déformations et la cartographie des orientations. En 2D, l'orientation est quantifiée par l'angle polaire. Dans les hyperespaces, l'orientation est classiquement obtenue par l'intermédiaire des angles en coordonnées hypersphériques.

Le terme local désigne la prise en compte d'un voisinage de taille prédéterminée pour le calcul des dérivées partielles en chaque point de l'image traitée, et plus généralement du pavé N-dimensionnel traité.

Le procédé comporte optionnellement une étape 68 de calcul de moyennes spatiales dans chacune des cartographies pour obtenir des profils d'évolution représentatives des distances interplanaires et orientations estimées.

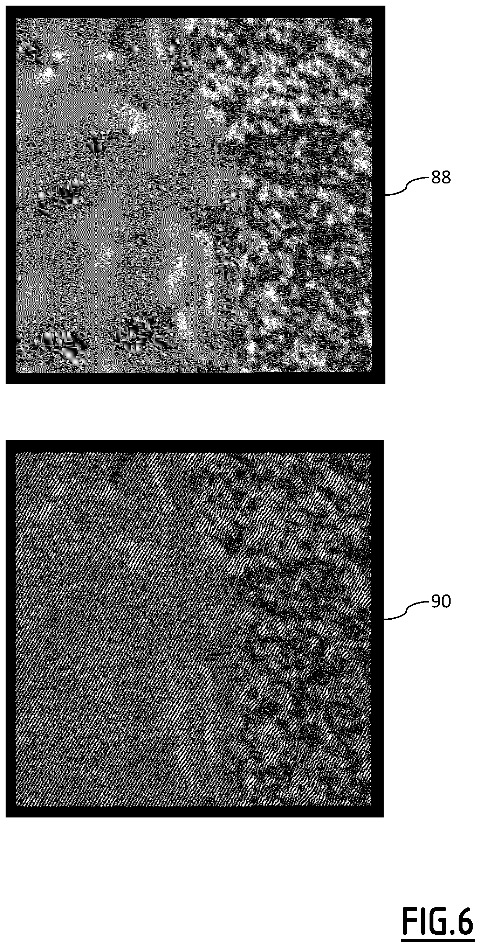

La **figure 6** illustre la cartographie des distances interplanaires 88, ou cartographie des déformations, obtenue pour l'image d'entrée 70, pour les plans cristallins (0-11) et (01-1) en appliquant le procédé décrit ci-dessus. La représentation en niveaux de gris s'étend sur une échelle allant de 238 pm (pixels les plus sombres de la cartographie 88) à 250 pm (pixels les plus clairs de la cartographie 88).

L'image 90 correspond à la superposition de l'image 88 des distances interplanaires et de l'image 84 représentative des données des plans cristallins (0-11) et (01-1) de l'image d'entrée 70 sous forme de zébrures.

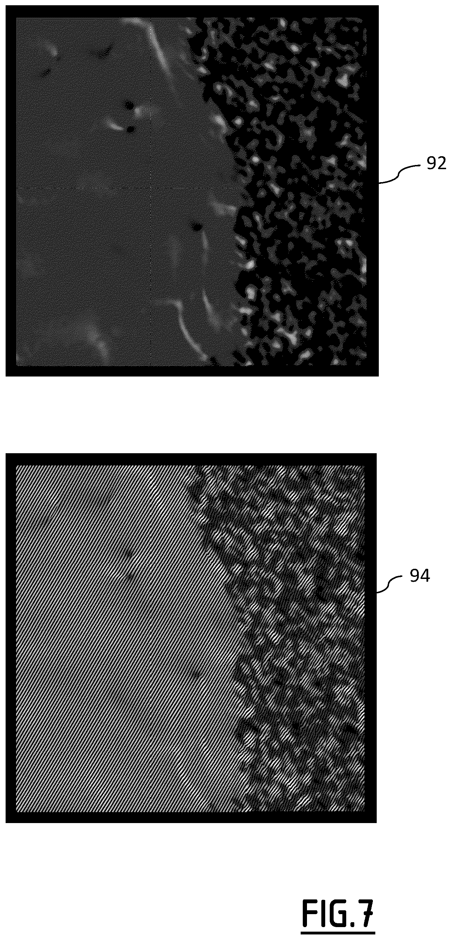

La **figure 7** illustre la cartographie des angles polaires 92, ou cartographie des orientations, obtenue pour l'image d'entrée 70, pour les plans cristallins (0-11) et (01-1) en appliquant le procédé décrit ci-dessus. La représentation en niveaux de gris s'étend sur une échelle allant de 111 degrés (pixels les plus sombres de la cartographie 92) à 121 degrés (pixels les plus clairs de la cartographie 92).

L'image 94 correspond à la superposition de l'image 92 et de l'image 84 représentative des données des plans cristallins (0-11) et (01-1) de l'image d'entrée 70.

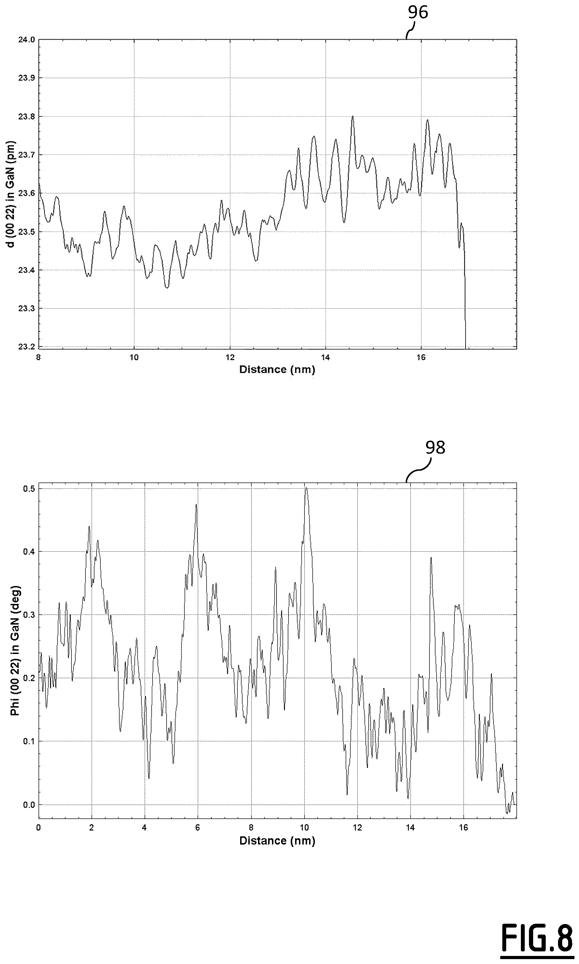

La **figure 8** illustre des graphes 96 et 98 représentatifs de profils de déformation moyennés sur toute la hauteur de l'image estimés à partir des cartographies calculées.

Le graphe 96 comprend un profil (ou courbe) des distances interplanaires, moyennées par colonne sur une cartographie des distances interplanaires obtenue par le procédé décrit ci-dessus, pour le matériau GaN (nitrure de gallium) et pour les plans cristallins (0022) et (00-22). Le profil du graphe 96 représente des distances interplanaires d(00 22) en picomètres sur l'axe des ordonnées en fonction d'une distance par rapport à un point origine de l'échantillon observé (en nm) sur l'axe des abscisses.

Le graphe 98 comprend un profil (ou courbe) des angles polaires, moyennés par colonne sur une cartographie des angles polaires obtenue par le procédé décrit ci-dessus, pour le matériau GaN (nitrure de gallium) et pour les plans cristallins (00 22) et (00-22). Le profil du graphe 98 représente les angles φ(00 22) en degrés sur l'axe des ordonnées en fonction d'une distance par rapport à un point origine de l'échantillon observé (en nm).

Comme on peut le constater sur les exemples illustrés, les précisions obtenues sont très fines, les fluctuations des distances interplanaires entre plans cristallins étant de l'ordre de 0,2 pm autour de 23.6 pm alors que la résolution spatiale nominale du microscope utilisé est de 80 pm. Avantageusement, cette précision record est rendue possible par les étapes d'augmentation du nombre de points (ou pixels) et d'affinage. Avantageusement, ces 2 étapes permettent d'obtenir la précision record.

Ainsi, avantageusement, le procédé proposé permet d'obtenir une précision largement améliorée par rapport à la précision du microscope d'observation, ce qui était inconcevable dans l'art antérieur.

## Revendications

1. Procédé de traitement de données multidimensionnelles de microscopie pour cartographier des déformations et des orientations de structure dans un échantillon d'au moins un matériau, comportant une obtention (40) d'au moins une image de microscopie dudit échantillon formant un pavé de données d'entrée, la ou chaque image dudit pavé de données d'entrée étant représentative d'une partie de l'échantillon observé, ledit pavé de données d'entrée étant représenté dans un espace à N dimensions, N étant supérieur ou égal à deux, chaque donnée dudit pavé correspondant à un point de l'espace à N dimensions, le procédé étant **caractérisé en ce qu'**il comporte des étapes de :
- pour au moins un pavé de données extrait dudit pavé de données d'entrée, dit pavé de composante, comportant des données homogènes selon un critère d'homogénéité relatif à au moins un matériau de l'échantillon observé, application (44) d'une transformation de super-résolution audit pavé de composante pour obtenir un pavé, dit pavé de gouttes super-résolu, comportant des gouttes représentatives d'une structure atomique d'une partie de l'échantillon observé,
- filtrage spectral (56) dudit pavé de gouttes super-résolu, comportant une application d'une transformation spectrale directe (58), d'un masque (60) prédéfini pour sélectionner deux plans cristallins choisis, et d'une transformation spectrale inverse (62) de ladite transformation spectrale directe, le filtrage spectral permettant d'obtenir un pavé filtré,
- application d'une analyse de Helmholtz (66) sur le pavé filtré permettant d'obtenir pour chaque point dudit pavé filtré une valeur de distance interplanaire et une valeur d'angle polaire entre les plans cristallins choisis, les valeurs de distance interplanaire formant une cartographie (30,88) des déformations de structure selon les plans cristallins choisis et les valeurs d'angle polaire formant une cartographie (32,92) des orientations de structure associée.

2. Procédé selon la revendication 1, dans lequel l'application d'une transformation de super-résolution (44) comporte une convolution (46) par un filtre HBSG de noyau carré de taille inférieure ou égale à deux fois la médiane des distances entre gouttes voisines.

3. Procédé selon la revendication 2, dans lequel l'application d'une transformation de super-résolution (44) comporte en outre une augmentation (48) du nombre de points du pavé à N dimensions obtenu par ladite transformation de super-résolution.

4. Procédé selon la revendication 2 ou 3, comportant en outre une étape de normalisation locale (50).

5. Procédé selon l'une quelconque des revendications 1 à 4, dans lequel l'application d'une transformation (44) de super-résolution pour obtenir un pavé de gouttes super-résolu comportant des gouttes représentatives d'une structure atomique d'une partie de l'échantillon observé met en oeuvre une étape de segmentation (52) utilisant un algorithme d'apprentissage machine, entraîné pour classifier les données du pavé de gouttes super-résolu en deux classes, respectivement une classe de « fond » et une classe de « gouttes ».

6. Procédé selon l'une quelconque des revendications 1 à 5, dans lequel l'application d'une transformation (44) de super-résolution pour obtenir un pavé de gouttes super-résolu comportant des gouttes représentatives d'une structure atomique d'une partie de l'échantillon observé met en oeuvre en outre une étape d'affinage (54).

7. Procédé selon la revendication 6 dans lequel l'étape d'affinage (54) met en oeuvre une application d'un masque de filtrage spectral d'affinage, dans lequel le masque de filtrage spectral d'affinage est obtenu à partir du maximum de la segmentation par apprentissage machine de la transformée de Fourier du pavé de composante normalisé entre 0 et 1 et d'un diffractogramme théorique ajusté normalisé entre 0 et 1.

8. Procédé selon la revendication 6 dans lequel l'étape d'affinage (54) met en oeuvre un calcul d'un diffractogramme expérimental dudit pavé de gouttes et un masquage par un diffractogramme théorique ajusté sur ledit diffractogramme expérimental.

9. Procédé selon l'une quelconque des revendications 1 à 8, dans lequel dans l'étape de filtrage spectral (56), ladite transformation spectrale est une transformée de Fourier.

10. Procédé selon l'une quelconque des revendications 1 à 9, comportant en outre une étape de correction des artéfacts (64) de filtrage spectral.

11. Programme d'ordinateur comportant des instructions logicielles qui, lorsqu'elles sont exécutées par un dispositif électronique programmable, mettent en oeuvre un procédé de traitement de données multidimensionnelles de microscopie conforme aux revendications 1 à 10.

12. Dispositif de traitement de données multidimensionnelles de microscopie pour cartographier des déformations et des orientations de structure dans un échantillon d'au moins un matériau, comportant un module (18) d'obtention d'au moins une image de microscopie dudit échantillon formant un pavé de données d'entrée, la ou chaque image dudit pavé de données d'entrée étant représentative d'une partie de l'échantillon observé, ledit pavé de données d'entrée étant représenté dans un espace à N dimensions, N étant supérieur ou égal à deux, chaque donnée dudit pavé correspondant à un point de l'espace à N dimensions, le dispositif comportant un processeur **caractérisé en ce qu'**il est configuré pour mettre en oeuvre:
- - pour au moins un pavé de données extrait dudit pavé de données d'entrée, dit pavé de composante, comportant des données homogènes selon un critère d'homogénéité relatif à au moins un matériau de l'échantillon observé, un module (22) d'application d'une transformation de super-résolution au pavé de composantes pour obtenir un pavé, dit pavé de gouttes super-résolu, comportant des gouttes représentatives d'une structure atomique d'une partie de l'échantillon observé,
- un module (24) de filtrage spectral dudit pavé de gouttes super-résolu, configuré pour appliquer une transformation spectrale directe, un masque prédéfini pour sélectionner deux plans cristallins choisis, et une transformation spectrale inverse de ladite transformation spectrale directe, le filtrage spectral permettant d'obtenir un pavé filtré,
- un module (26) d'application d'une analyse de Helmholtz sur le pavé filtré permettant d'obtenir en chaque point dudit pavé filtré une valeur de distance interplanaire et une valeur d'angle polaire entre les plans cristallins choisis, les valeurs de distance interplanaire formant une cartographie (30, 88) des déformations de structure selon les plans cristallins choisis et les valeurs d'angle polaire formant une cartographie (32, 92) des orientations de structure associée.
